# EUROPEAN PATENT APPLICATION

(11) **EP 1 757 442 A2**
(43) Date of publication of application: **28.02.2007**
(21) Application number: 06253082.9
(22) Date of filing: 14.06.2006
(51) Int. Cl.: B32B 27/00, C08J 5/18

(54) **Articles comprising nanoparticles**

(30) Priority: 16.06.2005 US 690982 P
(71) Applicant: Rohm and Haas Electronic Materials LLC, Marlborough, MA 01752 (US)
(72) Inventor: Anzures, Edgardo, Westborough Massachusetts 01581 (US); Barr, Robert K., Shrewsbury Massachusetts 01545 (US)
(74) Representative: Kent, Venetia Katherine

(57) **Abstract**

Articles are described. The articles include a cured layer having nanopartilces on a support film. The support film has an adhesive for joining the article to a substrate.

## Description

The present invention is directed to scratch and mar resistant articles. More specifically, the present invention is directed to scratch and mar resistant articles with improved optical properties.

"Mar" and "scratch" refer to physical deformations resulting from mechanical and chemical abrasion. "Mar resistance" is a measure of a material's ability to resist appearance degradation caused by small scale mechanical stress. "Scratch resistance" is the ability of a material to resist more severe damage than what is referred to in the art as mar. The two are regarded in the art as being different. As noted above, mar and scratch may result from manufacturing and environmental factors as well as through use. Although mars and scratches are in many respects different degrees of the same type of defect, a coating that improves mar resistance may not be effective in improving scratch resistance and vice versa.

While mars and scratches are undesirable on any article, they are especially undesirable on optical articles where they may compromise the aesthetics of an image or distort the image. For example, defects in the surfaces of such optical articles may cause light to undesirably scatter and reflect from the articles' surfaces, or may alter the refractive index of the articles at the place of the defect to change the transmission of light through the articles, thus distorting the image. To protect optical articles such as computer screens, touch screen displays, windows and other articles where a clear visual image is desired film coatings such as multi-layer films have been developed. Such multi-layer films have impact resistance and generally desirable optical properties.

Multi-layer films are sometimes formed together (e.g., co-extruded), are sometimes laminated from separate preformed film layers into a multi-layer film construction, or are placed together and kept in contact using an adhesive layer that may have optical properties. However, one or more of the components which compose the multi-layer film can negatively affect the optical properties of the films such as clarity, transmissivity, or cause such negative optical effects as ghosting, haloing, or cause an increased reflection of the optical product due to interfacial reflection.

Another optical problem is the formation of color "fringes". Such color fringes may be observable with the naked eye as a multitude of colors. This phenomenon may occur with or without a coating. While not being bound by theory, the phenomenon is believed to be due to interference patterns formed when light passes through optical articles such as glass windows or other such optical articles with coatings. It is highly undesirable because it may interfere with the optimum performance of the article

U.S. patent application publication number 2003/0224174 discloses a coating composition which allegedly has improved mar and scratch resistance. The coating is composed of a film forming resin with modified nanoparticles. The nanoparticles contain at least one reactive group on their surface which allegedly renders the nanoparticles incompatible with the resin, thus making them more surface active than they would be otherwise. The nanoparticles then are believed to rise to the surface of the coating after the coating is cured to provide enhanced mar and scratch resistance. The coating may be applied to transparent plastic substrates such as polycarbonates, polymethyl methacrylate and elastomeric substrates such as thermoplastic polyolefins.

Although there are coatings and articles which address the problems of mar and scratch resistance, there is still a need for articles which are mar and scratch resistant and at least reduces the undesired optical problems.

Articles include a composition including nanoparticles, one or more fluorinated compounds and one or more compounds to cure the composition, the composition is adjacent to a first side of a support film and an adhesive is adjacent a second side of the support film. The articles may be applied to various substrates to function as protective coatings. The articles also inhibit the formation of interference patterns. Such interference patterns are observable as color fringes when light passes through a transparent substrate such as glass and transparent polymer materials. The color fringes are undesirable since they compromise the optimum performance of the substrate.

In another aspect, the articles include a composition including nanoparticles, one or more fluorinated compounds, and one or more compounds to cure the composition, the composition is adjacent a first side of a support film and an adhesive is adjacent a second side of the support film, the adhesive is a releasable adhesive.

The compositions also may include one or more optional additives. Such additives include, but are not limited to, film forming polymers, antioxidants, colorants, antireflective materials, UV absorbers, stabilizers, plasticzers, levelers, slip agents, surfactants, adhesion promoters and diluents.

In a further aspect, a method includes providing an article including a composition including nanoparticles, one or more fluorinated compounds, one or more compounds to cure the composition, the composition is adjacent a first side of a support film and an adhesive is adjacent a second side of the support film; and applying the article to a substrate to protect the substrate and to inhibit the formation of interference patterns.

As used throughout this specification, the following abbreviations have the following meaning, unless the context indicates otherwise: °C = degrees Centigrade; UV = ultraviolet; T_{g} = glass transition temperature; gm = gram; mg = milligram; L = liter; mL = milliliter; cm = centimeter; mm = millimeter; µm = microns; nm = nanometers; nano = 10⁻⁹; mil = 0.001 inches = 25.4 microns; mJ = milliJoules; psi = pounds/in² = 0.06805 atm (atmospheres); 1 atm = 1.01325×10⁶ dynes/cm²; Mrad = megarad; 1 rad = 10⁻² gray; DSC = differential scanning calorimetry; GPC = gas pressure chromatography; M_{w} = weight average molecular weight; Mₙ = number average molecular weight; and ASTM = American Standard Testing Method.

The terms "polymer" and "copolymer" are used interchangeably throughout this specification. The term "oligomer" means a polymer with 2 to 10 repeating units. "(Meth)acrylate" includes both methacrylate and acrylate. "(Meth)acrylic acid" includes both methacrylic acid and acrylic acid. "Glass transition temperature" is the temperature at which an amorphous material (such as glass) changes from a brittle vitreous state to a plastic state. The term "diluent" means a carrier or vehicle, such as solvents or solid fillers. "Yellowness Index" is a deviation of the colorlessness to yellow as determined via colorimetric or spectrophotometric analysis. "Haze" (in transmission) is the scattering of light by a specimen responsible for the reduction in contrast of objects viewed through it; or the percent of transmitted light that is scattered such that its direction deviates more than a specified angle from the direction of the incident beam.

Unless otherwise noted, all percentages are by weight and are based on dry weight (solvent free weight). All numerical ranges are inclusive and combinable in any order, except where it is logical that such numerical ranges are constrained to add up to 100%.

Articles include a composition including nanoparticles, one or more fluorinated compounds and one or more compounds to cure the composition, the composition is adjacent to a first side of a support film and an adhesive is adjacent a second side of the support film. The compositions may be applied to various substrates to function as protective coatings, i.e., mar and scratch resistant coatings. The articles also inhibit the formation of interference patterns. It is believed that such interference patterns are observable as color fringes when light passes through a transparent substrate such as glass and transparent polymer materials. The color fringes are undesirable since they compromise the optimum performance of the substrate. When the article is applied to a substrate, the color fringes are unobservable with polarizing filters as well as without polarizing filters.

Any suitable nanoparticle may be used in the compositions. The nanoparticles may be crystalline or amorphous metals or ceramics as well as clays. The nanoparticles may be dispersions of surface-treated nanoparticles or un-treated nanoparticles, i.e., neat. Colloidal nanopartilces also may be used. Examples of inorganic nanoparticles include oxides, sulfides, sulfates, silica, silicates, carbonates, hydroxides and clays. Examples of oxides include the metal oxides such as, zirconia, titania, ceria, alumina, iron oxide, chromium oxide, magnesium oxide, cobalt oxide, antimony oxide, cadmium oxide, arsenic oxide, lead oxide and zinc oxide. Suitable sulfides and sulfates include zinc, lead, titanium, antimony, cadmium, iron, arsenic magnesium, aluminum, cobalt, and chromium. An example of suitable silica is colloidal silica. Typically, titania, alumina and silica are used in the compositions. More typically titania, such as colloidal titanium dioxide, and colloidal silica are used. Most typically colloidal silica is used. The nanoparticles may be commercially available, or prepared by methods known in the literature. Examples of methods of preparing nanoparticles are disclosed in U.S. 5,472,477 and U.S. 5,876,683.

Typically dispersions of surface-treated nanoparticles are used in the compositions. Examples of such surface-treated nanoparticles are HIGHLINK NanO G®, which is a dispersion of nanosilica in (meth)acrylic monomers and an organic solvent commercially available from Clariant; NANOCRYL®, which is a dispersion of nanosilica in (meth)acrylic monomers and NANOPOX®, which is a dispersion of nanosilica in epoxy monomers both commercially available from hanse chemie; ORANGOSILICASOL®, which is a nanosilica dispersion in various organic solvents commercially available from Nissan Chemical; NANODUR®, which is a dispersion of alumina in organic solvents and water commercially available from Nanophase; and NALCO COLLOIDAL SILICAS^{™} 1040, 1050, 1060, 2327 and 2329, which are colloidal silicas obtainable from Nalco Chemical Co., Naperville, IL, U.S.A.

One type of nanoparticle may be used in a composition, or two or more may be mixed together to tailor a composition to desired properties. The compositions include 20wt% to 80wt% nanoparticles, or such as from 30wt% to 60wt% nanoparticles, or such as from 40wt% to 50wt% nanoparticles.

The nanoparticles are believed to provide minimal impact on viscosity increase (Brookfield viscometer), improved scratch resistance (0000 steel wool rub, Taber abrader), increase toughness, increase modulus (Instron, nano-indentation, cantilever beam), improved barrier properties (gas permeability measured by manometric cell method (ASTM D1434) and coulometric method (ASTM D3985) are used), decreased moisture and vapor permeability (ASTM E96 and ASTM F372 methods are used) and increased weathering resistance (measured by an Atlas Weather-O-Meter) such as light, darkness, water spray, temperature and humidity conditions, and for some nanoparticles, such as silica, limited loss in transparency (UV and visible light spectrophotometer, Gardner hazemeter). The nanoparticles range in size of 5 nm to 500 nm, or such as from 10 nm to 150 nm, or such as from 10 nm to 75 nm.

Any suitable fluorinated compound may be used which does not cause agglomeration of the nanoparticles in the compositions and does not interfere with the desired optical properties. Such compounds include, but are not limited to, fluorinated polyethers, fluorocarbon (meth)acrylates, fluoroaliphatic polymeric esters and polyurethanes incorporated with fluorinated polyethers and combinations thereof. Typically the fluorinated compounds are chosen from one or more fluorinated polyethers, fluorocarbon (meth)acrylates, fluoroaliphatic polymeric esters having a perfluorinated carbon four group (C₄F₉) and polyurethanes incorporated with fluorinated polyethers derived from oxetane monomers. More typically the fluorinated compounds are chosen from one or more fluorinated polyethers such as hydroxy-terminated fluorinated polyethers, (meth)acrylate-terminated fluorinated polyethers, and polyurethanes incorporated with fluorinated polyethers derived from oxetane monomers. Most typically the fluorinated compounds are chosen from one or more hydroxy-terminated fluorinated polyethers and acrylate-terminated fluorinated polyethers.

Examples of suitable hydroxy-terminated fluorinated polyethers which may be used include hydroxy-terminated fluorinated polyethers which are derived from oxetane monomers. Such hydroxy-terminated fluorinated polyethers have asymmetric monosubstituted pendent fluorinated alkoxyalkylene groups. Examples of such hydroxy-terminated polyethers include, but are no limited to, compounds having a formula: 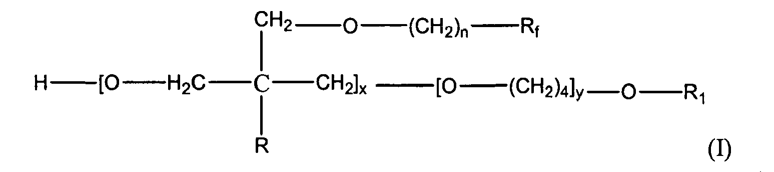 wherein n is an integer of 1 to 3, typically n is 1 to 2, more typically n is 1; R is (C₁-C₂)alkyl, such as methyl and ethyl, typically, R is methyl; R_{f} is a linear or branched perfluorinated (C₁-C₂₀)alkyl, or an oxaperfluorinated polyether of 4 to 20 carbons, typically R_{f} is a linear perfluorinated (C₁-C₃)alkyl, more typically R_{f} is -CF₃, -C₂F₅, or - C₃F₇, most typically R_{f} is -CF₃; x is 1 to 100, typically x is 1 to 20, more typically, x is 1 to 8, and most typically x is 3 to 6; y is 0 to 150, typically y is 0 to 20, more typically y is 0 to 10, most typically y is 0; R₁ may be the same or different, typically R₁ is the same, and is hydrogen, an alkyl alcohol residue having from 2 to 5 carbons, or a SO₃M, where M is a counter-ion, such as sodium (Na⁺), potassium (K⁺) or ammonium (NH₄⁺), typically R₁ is hydrogen or SO₃M, more typically R₁ is hydrogen.

Polyurethanes incorporated with fluorinated polyethers may be composed of repeat units having a formula: 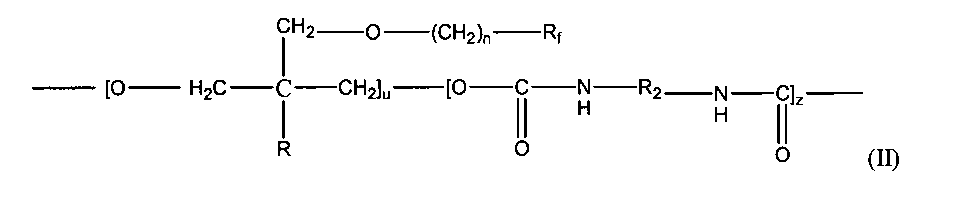 wherein n, R and R_{f} are defined above; u is 10 to 200, typically 15 to 50, more typically 20 to 30, most typically 20; z is 1 to 10, more typically 1 to 2, most typically 1; and R₂ is a divalent hydrocarbyl group, examples of which include the following structures:

-[-CH₂-]₆-

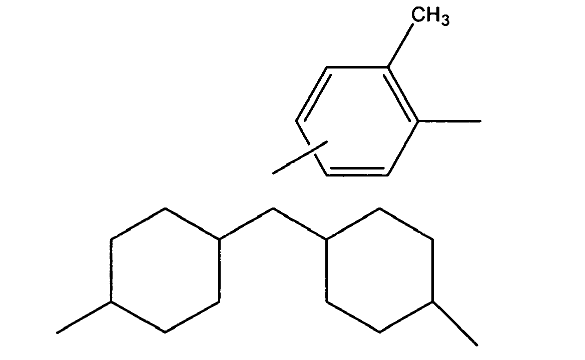

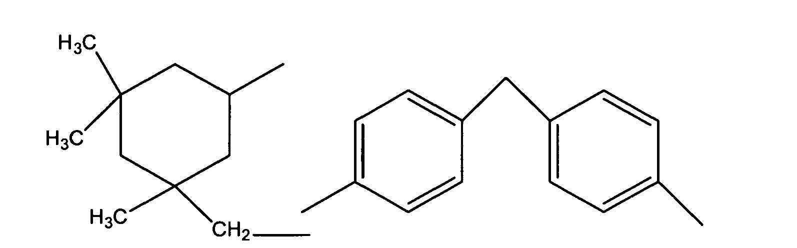

The cross-linking agents used to make the polyurethanes having formula (II) include, but are not limited to, low molecular weight polyols or polyamines such as trimethylpropane, pentaerythitol, ISONOL^{™} 93, trimethylolethane, triethanolamine, Jeffamines, 1,4-butanediamine, xylene diamine, diethylenetriamine, methylene dianiline, and diethanolamine. Typcially, the cross-linking agent is trimethylolpropane, ISONOL^{™} 93, methylene dianiline and the Jeffamines.

Examples of other suitable fluorinated polyethers have a formula: 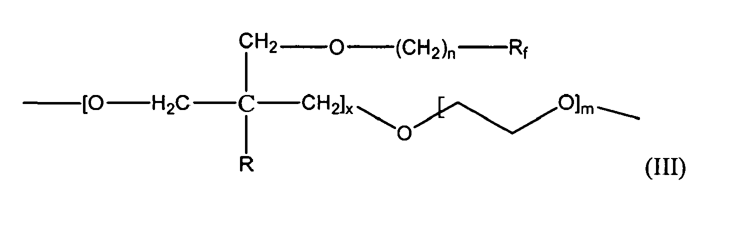 wherein n, R, and R_{f} are as defined above; and m is 1 to 50, typically m is 1 to 25, more typically m is 15 to 25. Typically the polymers are end capped with hydrogen or SO₃M.

The fluorinated polyethers may be obtained commercially or prepared by methods known in the art. Many of the fluorinated polyethers may be commercially obtained from Omnova Solutions Inc. of Fairlawn Ohio, U.S.A under the POLYFOX^{™} tradename. Methods of preparing such compounds are disclosed in U.S. 5,650,483, U.S. 5,468,841, U.S. 5,654,450, U.S. 5,663,289, U.S. 5,668,250 and U.S. 5,668,251.

Examples of suitable fluorocarbon (meth)acrylates include pentadecafluorooctyl acrylate, unadecafluorohexyl acrylate, nonafluoropentyl acrylate, heptafluorobutyl acrylate, octafluoropentyl acrylate, pentafluoropropyl acrylate, trifluoroacrylate, triisofluoroisopropyl methacrylate and trifluoroethyl methacrylate. Such compounds may be made according to methods in the literature or may be obtained commercially. An example of a commercial product is EBECRYL 381 from Cytec/Surface Specialties. EBECRYL 381 is a mixture of 25wt% fluorocarbon acrylates having one to four carbon perfluorinated groups and 75wt% propoxylated glycerol triacrylate.

Fluoroaliphatic polymeric esters also may be made from the methods disclosed in the literature, or obtained commercially. Examples of commercially available fluoroaliphatic polymeric ester having four carbons in the aliphatic group are the NOVECs, which are available from 3M Company.

The fluorinated compounds are included in the compositions in amounts of 0.01wt% to 5wt%, or such as from 0.025wt% to 3wt%, or such as 0.05wt% to 1.5.

The compositions may be cured by any suitable method known in the art. Examples of curing include electron beam, UV light, visible light, thermal cure, moisture cure and by free radical initiators. Conventional curing compounds may be used in the compositions. Examples of such curing compounds include unsaturated monomers, oligomers, epoxy compounds, photoinitiators and thermal initiators. In general, curing compounds are included in the compositions in amounts of 0.01wt% to 80wt%, or such as from 0.5wt% to 60wt%, or such as from 1wt% to 50wt%, or such as from 5wt% to 20wt% of the composition.

Examples of epoxy compounds and unsaturated monomers and oligomers include epoxy compounds such as bisphenol A-based materials and cycloaliphatic epoxides, vinyl ethers such as divinyl ethers, aliphatic urethane divinyl ethers, (meth)acrylic monomers such as mono and multifunctional (meth)acrylate monomers such as isobornyl (meth)acrylate, cyclic trimethylolpropane formal acrylate, tetrahydrofurfuryl acrylate, alkoxylated hexanediol diacrylate, tripropylene glycol diacrylate, neopentyl glycol diacrylate, ethoxylated bisphenol A di(meth)acrylate, trimethylolpropane triacrylate, ethoxylated trimethylolpropane triacrylate, dipentaerythritol pentaacrylate, (meth)acrylic acids, oligomers such as urethane acrylates, polyester acrylates, epoxy acrylates and functional polymers such as acrylic functional acrylic polymers. Typically such curing compounds may be used in amounts of 10wt% to 80wt%, or such as from 20wt% to 60wt% of the composition.

Any suitable photoinitiator may be used to cure the composition. Examples of such photoinitiators include cationic photoinitiators such as sulfonium salts and iodonium salts, free radical photoinititators such as arylketones, diarylketones and arylphoshine oxide-containing photoinitiators. Such photoinitiators are well known in the art and are readily commercially available, or may be made by methods described in the literature. Examples of commercially available arylketones include DAROCUR^{™} 184 and IRGACURE™ 1173; and examples of commercially available arylphosphine oxide-containing photoinitiators include IRGACURE™ 500, 819 and 1850.

Examples of suitable photoinitiators which are onium salts include onium salts in which the onium cation is iodonium, sulfonium, phosphonium, oxysulfonium, oxysulfoxonium, sulfoxonium, ammonium, diazonium, selononium, arsonium; and onium salts where the anion is a halogen such as chloride or a non-nucleophilic anion such as triflate, tetrafluoroborate and trifluoromethyl acetate.

The photoinitiators typically are included in the compositions in amounts of 0.01wt% to 10wt%, or such as from 0.5wt% to 5wt%.

Other suitable curing compounds include thermal initiators and redox initiators. Such compounds may be used in conventional amounts.

In addition to the nanoparticles, the one or more fluorinated compounds, the one or more curing compounds, the compositions may include one or more optional additives. Such additives include, but are not limited to, film forming polymers, UV absorbers, UV stabilizers, antioxidants, colorants, surfactants, and diluents.

Any suitable film forming polymer may be used. Suitable film forming polymers include, but are not limited to, (meth)acrylate polymers, polyurethanes, polyethers, polyesters, polyamides, polyester-polyurethanes, polyether-polyurethanes, polyester-polyether-polyurethanes, maleic anhydride ester copolymers, and butadiene-styrene copolymers. Typically, the film forming polymers are added to the compositions when they are formulated as paint such as for spray or brush application. When added to the compositions, the film forming polymers may be included in amounts of 1wt% to 60wt%, or such as from 5wt% to 40wt%, or such as from 10wt% to 20wt%. Such polymers are well known in the art, or may be prepared from the literature. Many are commercially available.

Any suitable antioxidant may be used. Suitable antioxidants which may be included are, for example, aromatic amine compounds such as N,N-di-2-naphthyl-p-phenylenediamine, hydroquinone compounds such as 6-ethoxy-2,2,4-trimethyl-1,2-dihydroquinone, quinoline compounds such as trimethyldihydroquinoline polymer and phenol compounds such as 2,6-di-t-butyl-p-cresol. Many antioxidants are commercially available or they may be made according to methods disclosed in the literature. An example of a commercially available phenol is IRGANOX^{™} such as IRGANOX^{™} 1010. When antioxidants are used in the compositions, they may be included in amounts of 0.01wt% to 5wt%, or such as from 0.5wt% to 2wt%.

Any suitable stabilizer may be used. Suitable stabilizers include, but are not limited to, various UV absorbers. Examples are hindered-amines such as bis(1,2,2,6,6-pentamethyl-4-piperidinyl)sebacate, methyl(1,2,2,6,6-pentamethyl-4-piperidinyl)sebacate and bis(1,2,2,6,6-pentamethyl-4-piperidinyl)(3,5-di-tert-butyl-4-hydroxybenzyl)butyl propanediolhydroxyphenyl; benzotriazoles such as hydroxyphenyl benzotriazoles such as 2-(2'-hydroxy-5'-methylphenyl) benzotriazole; benzophenone UV absorbers and salicylic acid derivatives. An example of a benzophenone UV absorber is 2-hydroxy-4-methoxybenzophenone, and an example of a salicylic acid derivative is p-octylphenyl salicylate. Many of the stabilizers are commercially available, or may be prepared by methods known in the literature. An example of a commercially available hindered amine includes TINUVIN^{™} 622, obtainable from Ciba-Geigy Corporation. When stabilizers are included in the formulation, they may be included in amounts of 0.01wt% to 5wt%, or such as 0.05wt% to 2wt%.

Examples of suitable colorants are dyes and pigments. Examples of dyes include Leuco dyes and their derivatives, phthalocyanine type, azo type, and anthraquinone type dyes. Examples of suitable pigments include carbon black, methane type, quinophthalone type, and anthrapyridone type pigments. Colorants may be used in amounts such as 0.1 wt% to 10wt%, or such as from 1wt% to 5wt% of the composition.

Various surfactants also may be included such as non-ionic surfactants, amphoteric surfactants, and ionic surfactants. Such surfactants are well known in the art and are commercially available, or may be made according to methods described in the literature. Typically, such surfactants are used in amounts of 0.01wt% to 5wt%, or such as from 0.5 wt% to 2wt% of the composition.

Any suitable diluent may be used. Typically, diluents are added in amounts sufficient to bring the composition to 100wt%. The diluents may be solid fillers, water or organic solvents or mixtures thereof. Examples of fillers include carboxymethyl cellulose and derivatives thereof. Examples of suitable organic diluents include alcohols, acetone, methyl ethyl ketone, and propylene glycol methyl ether acetate.

Additional optional additives which may be included in the compositions include, but are not limited to, antireflective materials, levelers, plasticizers, adhesion promoters and slip agents. Such additives are well known in the art and may be used in conventional amounts.

The components may be mixed or blended together in any order. Typically, the components are mixed together at room temperature. Optionally, sufficient heat and milling techniques may be applied to solubilize or disperse the components in a diluent.

The compositions may be applied to a support film by any suitable method in the art to form a coating on the support film. Examples of such methods include spray coating, brushing, immersing the substrate in a bath of the composition, reverse roll, knife over roll, gravure, rod and slot. After the coating is formed on the film, it is cured. The thickness of the cured coating may range from 0.05 mils to 5 mils, or such as from 0.2 mil to 2 mils.

The support films have a tensile strength at break of 3000 psi and greater or such as from 3000 psi to 7000 psi (ASTM D882). Such support films include, but are not limited to, polymer films of polyolefins such as polyethylene and polypropylene, vinyl chloride, polystyrenes, acrylonitrile-butadiene-styrene, polyvinyl alcohol, polyacrylics, acrylonitrile-styrene polymers, vinylidene chlorides, acrylonitrile acrylic styrene polymers, acrylonitrile ethylene-propylene-terpolymer styrene polymers, polyurethanes, polyvinyl butyral polymers, poly-4-methylpentene-1 polymers, polybutene-1 polymers, poly (vinylidene fluoride) polymers, polyvinyl fluoride polymers, polycarbonates, copolyestercarbonates, polyamides, polyacetals, polyphenylene oxides, polyesters such as polybutylene terephthalate and polyethylene terephthalate, polyphenylene sulfides, polyimides, polysulfones, polyether sulfones, aromatic polyesters, glycolized polyesters, polyallylates and mixtures thereof.

The support films may have a thickness of 0.5 mil to 10 mils, or such as from 2 mils to 8 mils, or such as from 3 mils to 5 mils. Such support films are optically clear and have tensile strengths at yield of 1000 psi and greater or such as from 2000 psi to 5000 psi (ASTM D882).

The tensile elongation of the support films is less than or equal to 300% or such as from 300% to less than or equal to 175% (ASTM D882). The tensile modulus is greater than or equal to 50,000 psi or such as from 100,000 psi to greater than or equal to 200,000 psi (ASTM D882).

Support films include an adhesive opposite the side on which the composition containing the nanopartilces is applied. Suitable adhesives are transparent and typically have light transmissions in the visible spectrum of greater than or equal to 80% or such as from 80% to greater than or equal to 90%. Typically, a protective backing is included on the adhesive to protect it from the environment prior to use.

Any suitable adhesive which is transparent and prevents formation of interference patterns with or without polarizing filters may be used. Typically, the adhesive has a refractive index of 1.4 to 1.65 or such as 1.45 to 1.6 (ASTM D542A). Examples of suitable adhesives include permanent adhesives, semi-permanent adhesives, repositionable adhesives, releasable adhesives, pressure sensitive adhesives and freezer category adhesives. Many of such adhesives may be classified as hot-melt, hot-melt-pressure sensitive and pressure sensitive adhesives. Many releasable adhesives also are pressure sensitive. Adhesives may be water-based, solvent based, 100% solids which may be non-curing and curing. Adhesive thickness may range from 0.05 mils to 5 mils, or such as from 0.1 mils to 3 mils, or such as from 0.3 mils to 2 mils. Such adhesives are well known in the art and may be commercially obtained or made according to the literature.

Suitable adhesives typically have yellowness indexes of less than or equal to 3, or such as from 3 to less than or equal to 1 (ASTM D1925). The adhesives also may have a haze of 3% or less, or such as from 3% to less than or equal to 1% (ASTM D1300).

Typically, the adhesives are releasable adhesives. The releasable adhesives are typically pressure sensitive adhesives. Examples of such releasable pressure sensitive adhesives are acrylics, polyurethanes, poly-alpha-olefins, silicones, combinations of acrylate pressure sensitive adhesives and thermoplastic elastomer-based pressure sensitive adhesives, and tackified natural and synthetic rubbers.

Exemplary pressure sensitive adhesives include acrylic and silicone based adhesives. Examples of silicone based pressure sensitive adhesives include polydimethylsiloxane (PDMS) polymers that contain silanol functionalities at the polymer chain ends and polydimethyldiphenylsiloxane (PDMDPS) polymers that contain silanol functionality at the polymer chain ends. These are often referred to as MQ resins. The MQ name derives from the fact that its structure has a core of three-dimensional Q units (SiO₄/₂) surrounded by a shell of M units (CH₃SiO). The resin also has a level of silanol functionality on the surface. The ratio of M:Q is typically in the range of 0.6-1.21. Suitable acrylic pressure sensitive adhesives have T_{g} of -5° C and less, or such as from -5° C to -60° C. Typically, the T_{g} is from -5° C to -15° C and more typically the T_{g} is from -40° C to -60° C.

Examples of suitable polyurethane type releasable adhesives include a polyurethane elastomer having a soft segment which includes a long chain polyol as a main component and a hard segment which includes a diisocyanate compound and a chain extension agent. Typically, the long chain polyol is a polyester polyol or a polyether polyol. The diisocyanate compound may, for example, be tolylene diisocyanate (TDI), diphenylmethane diisocyanate (MDI), and hexamethylene diisocyanate (HDI). The chain extension agent may, for example, be a low molecular weight polyol, and an aromatic diamine.

Such polyurethane elastomers include, but are not limited to, (1) one-component types, where a thermoplastic polyurethane elastomer, produced by polymerizing a long chain polyol and a diisocyante, such as TDI or MDI is diluted with an organic solvent; and (2) two-component types, where a curing reaction is carried out by adding a cross-linking agent, such as, a polyisocyanate, to a polyurethane elastomer or a prepolymer thereof. Typically, a cross-linking accelerator also is added.

Typically the two-component type polyurethane elastomers are used in contrast to the one-component type. When a polyisocyanate is used as the cross-linking agent, it is an aliphatic or alicyclic polyisocyanate. This results in improved weathering resistance.

Further, the polyurethane elastomer may be of the moisture-curing type, where an isocyanate is reacted with moisture in air, or of the thermosetting extrusion type, i.e., hot-melt.

In addition, other polyurethane releasable adhesives include, for example, a polyurethane produced by reacting a prepolymer, having an end isocyanate group and produced by reacting a mixture of one or more polyols having an average functional group number of 2 to 2.6 with an excess of organic diisocyanate, with a mixture of one or more polyols having an average functional number of 2 or more in an equivalent ratio of -N=C=O to -OH of 0.65 to 1.15; where the total of the average functional group number of the polyol mixture and the average functional group number of the polyol mixture as the prepolymer component is more than 4 and less than 5.

Polyol mixtures include, but are not limited to, propylene glycol, ethylene glycol, polymer produced by the addition polymerization of propylene oxide or ethylene oxide to propylene glycol or ethylene glycol; polyether diols, such as polytetramethylene ether glycol; polyester glycols produced by the dehydration condensation of low molecular weight glycols, such as, ethylene glycol, propylene glycol and 1,4-butane diol and organic acids, such as, adipic acid and phthalic acid; glycerol, trimethylol propane, pentaerythritol, arabitol, sorbitol, and polymers produced by the addition polymerization of propylene oxide or ethylene oxide to one or more of these as an initial agent. Polymer polyols produced by polymerizing vinyl monomers, such as, acrylonitrile and styrene in the polyols described above also may be used.

Suitable organic diisocyanates include, but are not limited to, aromatic diisocyanates, such as, 2,4-tolyllenediisocyanate, 2,6-tolylenediisocyante and mixtures thereof, crude tolylenediisocyanate, 4,4'-diphenylmethanediisocyanate, 2,4-diphenylmethanediisocyanate, polymethylenepolyphenyl polyisocyanate and 1,5-naphthylenediisocyanate; aliphatic or alicyclic diisocyanates, such as, hexamethylenediisocyante, lysinediisocyanate, isophoronediisocyanate, 4,4'-dicyclohexylmethane-diisocyanate, isopropylidene bis (cyclohexylisocyanate), and xylidenediisocyanate; and dimmers, trimers, and carbodiimide modified compounds thereof. Among the organic diisocyanates the aliphatic and alicyclic diisocyanates are typically used because of their weathering resistance.

Additional polyurethane releasable adhesives include, but are not limited to, a polyurethane including a polyisocyanate compound and a low molecular weight olefin type polyol that has no polar groups in it molecular skeleton, and has end hydroxyl groups, a number average molecular weight of from 500 to 5,000 and from 1.5 to 8 hydroxyl groups per molecule.

The adhesive may be applied to the support film by any suitable method known in the art. Examples include dissolving the adhesive in a suitable solvent and applying it to the support film, such as, by hot melt extrusion; dispersing or emulsifying the adhesive in a suitable medium and applying it to the base film; casting or by calendar rolls or knives; and forming the adhesive on a release liner and transferring it to the support film.

When the anchoring force between the support film and the adhesive layer is insufficient, the surface of the support film may be treated with corona discharge or a primer layer may be applied thereto. Such a primer layer may include a polyester resin, a urethane resin, or a chlorinated polyolefin resin and may contain fillers, as required. Examples of such fillers include, but are not limited to, silica, calcium carbonate, magnesium carbonate, kaolin, sintered clay, bentonite, zeolite, talc and diatomaceous earth.

Protective backings, which protect the adhesives from the environment and accidental adhesion prior to application of the article to a substrate, may be composed of materials which include, but are not limited to, cellulose, polymers and copolymers of polyesters, polyurethanes, vinyl copolymers, polyolefins, polycarbonates, polyimides, polyamides, epoxy polymers and combinations thereof.

Substrates to which the articles may be applied include, but are not limited to, glass, such as, mirrors, windows, lenses, windshields of terrestrial, aeronautical and marine vehicles; other vehicle components, such as, fenders, hoods, doors, bumpers; article sidings; green houses and solariums; household appliances, such as, washers and dryers, ovens and stoves, refrigerators; furniture; textiles; and protective gear, such as, helmets including visors of helmets. Generally, the compositions and articles may be applied to materials such as glass, polymer materials, metal, and wood.

Typically, the articles are applied to glass and transparent polymers such as used in windows, windshields, mirrors, and lenses. The articles permit at least 70% of visible light in the wavelength range of 400nm to 700nm to pass through. Typically, the articles permit from 85% to 90% of visible light to pass through. Articles with releasable adhesives may be applied to the substrate and peeled away as desired without damage or staining of the substrate.

In addition to the other properties described above, the articles have a yellowness index of less than or equal to 3 or such as from 3 to less than or equal to 1 (ASTM D1925). Haze ranges from less than or equal to 3%, or such as from 3% to less than or equal to 1% (ASTM D1300).

The compositions and articles provide mar and scratch resistant coatings for substrates and inhibit interference patterns, which typically are observable by color fringes. Additionally, many of the formulations include fluorinated compounds which are environmentally friendly. Typically, fluorinated compounds where R_{f} is CF₃, C₂F₅, C₃F₇, or C₄F₉ are environmentally friendly.

### Example 1

Poly-3-(2,2,2-trifluoroethoxymethyl)-3-methyloxetane with a T_{g} = -45° C, an Mₙ = 7376 and an M_{w} = 7951 is mixed with a urethane acrylate oligomer having an M_{w} = 965, an arylphosphine oxide containing free radical photoinitiator IRGACURE™ 184, and colloidal silica particles dispersed 50% by weight in tripropylene glycol diacrylate at room temperature to form a liquid mixture. The average size of the colloidal silica particles is 50nm. The mixture includes 0.5wt% ofpoly-3-(2,2,2-trifluoroethoxymethyl)-3-methyloxetane, 30.5wt% of the urethane acrylate oligomer, 64wt% of the colloidal silica nanoparticle dispersion, and 5wt% of the free radical photoinitiator.

The mixture is drawn down onto an optically clear methylmethacrylatebutylacrylate copolymer support film with a thickness of 5 mils to form a coating on the support film. The copolymer has an M_{w} = 100,000. UV light is applied to the coating with a xenon pulsed lamp equipped with a B bulb in air for 9 seconds (100 mJ/cm²) to cure it. The coating is 0.5 mils thick.

A copolymer of 2-ethylhexyl acrylate, vinyl acetate and methacrylic acid with a T_{g} of -43° C as determined by DSC is applied to the support film on the side opposite to the side of the cured coating. The adhesive is water-based applied using gravure to form a layer 1 mil thick.

A polyester release liner is placed over the adhesive to protect it from the environment prior to use. The polyester has an intrinsic viscosity of 6.75 mL/g in dichloroacetic acid solution at 25° C. The polyester is a copolymer derived from dihydroxy alcohols of 50% ethylene glycol and 50% propylene glycol.

The coating of the article with the nanoparticles is then scoured with steel wool of 0000 gauge for 5 seconds. No marring and scratches are expected. Also, no color fringes are expected to be seen with or without a polarized filter when light passes through the article.

### Example 2

A mixture is prepared by combining poly-3-(2,2,2-trifluroethoxymethyl)-3-methyloxetane having a Mₙ = 7376, M_{w} = 7951 and a Tg = -45° C with a urethane acrylate oligomer having an M_{w} = 965, an acrylic copolymer of methylmethacrylate and butyl acrylate having a M_{w} = 8000, the free radical photoinitiators are IRGACURE™ 184 and IRGACURE™ 819, and a dispersion of 30wt% alumina nanoparticles with an average size of 25 nm in propylene glycol methyl ether acetate. The molecular weights are determined by GPC. The fluorinated polymer composes 0.5wt% of the formulation, the urethane polymer composes 40wt%, the acrylic copolymer composes 30wt%, the nanoparticle dispersion compose 3wt%, the IRGACURE™ 819 composes 2wt% and the IRGACURE™ 184 composes 4wt%. The remainder is propylene glycol methyl ether acetate solvent.

The mixture is coated on a 5 mils transparent support film as in Example 1. The solvent is driven off in a heated forced air oven. UV light is applied to the coating as described in Example 1 to cure it. After curing, an adhesive with the formulation as in Example 1 is applied to the transparent support film opposite to the side on which the coating is applied.

The side of the article with the film coating having the alumina nanoparticles is scoured with steel wool of gauge 0000 for 10 seconds. No marring and scratches are expected. Also, no color fringes are expected to be observable with or without a polarized filter when light passes through the articles.

### Example 3

A fluorinated oligomer with acrylate functionality and acrylate terminated fluorinated polyether (POLYFOX^{™} PF-3320) is mixed with ethoxylated trimethylol propane triacrylate having an M_{w} = 1000, acrylic copolymer derived from (meth)acrylate and butyl acrylate monomers with an M_{w} = 10,000, nanoparticles of titanium dioxide with an average size of 90 nm, and the organic solvent methyl ethyl ketone. The fluorinated oligomer composes 0.05wt% of the mixture, the acrylic copolymers composes 20wt%, the ethoxylated trimethylol propane triacrylate composes 20wt%, the nanoparticles compose 20wt%, and the remainder is composed of methyl ethyl ketone organic solvent to bring the formulation to 100wt%.

The mixture is spray coated onto a support film 5 mils thick composed of polyethylene terephthalate with a T_{g} = 140° C to form a coating on the support film. The coating is heated in a forced air oven to drive off the organic solvent. The coating is then cured on the polyethylene terephthalate support film using an electron beam with a dose of 6 Mrads. The cured coating is 2 mils thick. The adhesive with the formulation of Example 1 is applied to the polyethylene terephthalate film.

The cured coating with the nanoparticles is scoured with steel wool of 0000 gauge for 15 seconds. No marring and scratching are expected on the surface. Also, no color fringes are expected to be seen with or without a polarized filter when light passes through the article.

### Example 4

A fluorinated hydrocarbon acrylate dispersed in triacrylate monomer (EBECRYL 381) is mixed with tripropylene glycol diacrylate and ethoxylated trimethylol propane triacrylate, colloidal nanoparticles of silica having an average size of 50 nm, and a free radical photoinitiator IRGACURE™ 184. The fluorinated hydrocarbon acrylate composes 2wt% of the composition, the tripropylene glycol diacrylate composes 40wt% of the composition, the ethoxylated trimethylol propane triacrylate composes 25wt% of the composition, the nanoparticles compose 27wt%, and the free radical photoinitiator composes 6wt% of the composition.

The composition is roller coated onto a 5 mils polycarbonate support film to form a 1 mil coating on the support film. The polycarbonate film has a Tg = 143° C as determined by DSC.

The coating is UV cured in air for 10 seconds using a xenon lamp (100 mJ/cm²). The film coating is 0.5 mils thick. After the curing, a polyurethane adhesive of 2 mils thick is applied to the support film on the side opposite to that of the cured coating by hot-melt extrusion to form an article. The polyurethane has an adhesive strength of 1 g/25mm.

The article is then applied to one side of a glass window 3 cm thick. The side of the window containing the article is exposed to sunlight. At least 80% of the light in the visible spectrum from 400nm to 700nm is expected to pass through the article without observable color fringes with or without a polarized filter.

### Example 5

A fluoroaliphatic polymeric ester with an R_{f}= C₄F₉ (NOVEC FC-4434) is mixed with Tone Polyol 0301 which is a linear polycaprolactone polyol, 40% nanosilica in cycloaliphatic epoxy with an average particle size of 25nm (NANOPOX C620), and triarylsulfonium hexafluoroantimonate salts (CYRACURE UVI-6976). The fluroaliphatic polymer composes 1wt% of the mixture, the dispersion of nanoparticles composes 80wt%, the polyol composes 15wt% and the onium salt curing agent composes 4wt%.

The composition is spray coated onto a polycarbonate support film 8 mils thick. The polycarbonate support film has a Tg = 147° C as determined by DSC.

The mixture is cured to form a coating on the support film having a thickness of 1 mil using a Fusion D lamp in air at 500 mJ/cm². A polyurethane adhesive is applied to the polycarbonate film on the side opposite to that on which the film coating is applied. It is applied by a conventional hot-melt process. The adhesive is 0.5 mils thick and has an adhesive strength of 50 g/25 mm.

The article is placed on a glass window 5 cm thick. The side with the article is exposed to direct sun light and 85% to 90% of the visible light is expected to pass through the article and the window. No color fringes are expected to be seen.

The surface of the article is then scoured with 0000 gauge steel wool for 5 seconds. No mars and scratches are expected.

### Example 6

Poly-3-(2,2,2-trifluoroethoxymethyl)-3-methyloxetane with a T_{g} = -45° C, an Mₙ = 7376 and an M_{w} = 7951 is mixed with a urethane acrylate oligomer having an Mw = 965, arylphosphine oxide containing free radical photoinitiator IRGACURE™ 184, and colloidal silica particles dispersed 50% by weight in tripropylene glycol diacrylate at room temperature to form a liquid mixture. The average size of the colloidal silica particles is 50nm. The mixture includes 0.5wt% of poly-3-(2,2,2-trifluoroethoxymethyl)-3-methyloxetane, 30.5wt% of the urethane acrylate oligomer, 64wt% of the colloidal silica nanoparticles, and 5wt% of the free radical photoinitiator.

The mixture is drawn down onto an optically clear methylmethacrylate-butylacrylate copolymer support film with a thickness of 5 mils to form a coating on the support film. The copolymer has an Mw = 100,000. UV light is applied to the coating with a xenon pulsed lamp equipped with a B bulb in air for 9 seconds (100 mJ/cm²) to cure it. The coating is 0.5 mils thick.

A silicone pressure sensitive adhesive made from a linear polysiloxane polymer and a silicate tackifying resin (MQ resin) with a T_{g} = -90° C is applied by transfer coating to the support film on the side opposite to the side of the cured coating. The adhesive layer is 1 mil thick.

A polyester liner is placed over the adhesive to protect it from the environment prior to use. The polyester has an intrinsic viscosity of 6.75 mL/g in dichloroacetic acid at 25° C. The polyester is a copolymer derived from dihydroxy alcohols of 50% ethylene glycol and 50% propylene glycol.

The article is then taken outside of the laboratory, and the polyester liner is removed. The article is then applied on the clean windshield of a pick-up truck. The surface of the article is then scoured with 0000 gauge wool for 10 seconds. No mars and scratches are expected. Also, no color fringes are expected to be seen through the windshield where the article is applied, with or without polarizing filters.

## Claims

1. An article comprising a composition comprising nanoparticles, one or more fluorinated compounds and one or more compounds to cure the composition, the composition is adjacent to a first side of a support film and an adhesive is adjacent a second side of the support film.

2. The composition of claim 1, wherein the fluorinated compounds are chosen from one or more of fluorinated polyethers, fluorocarbon (meth)acrylates, fluoroaliphatic polymer esters and polyurethanes incorporated with fluorinated polyethers.

3. The article of claim 1, wherein the nanoparticles are chosen from dispersions of surface treated nanoparticles, neat nanoparticles and mixtures thereof.

4. The article of claim 1, wherein the support film is chosen from one or more polyolefins, polyvinyl chloride, polystyrenes, acrylonitrile-butadiene-styrene, polyvinyl alcohols, polyacrylics, acrylonitrile-styrene polymers, polyvinylidene chlorides, acrylonitrile acrylic styrene polymers, acrylonitrile ethylene-propylene terpolymer styrene polymers, polyurethanes, polybutyral polymers, poly-4-methylpentene-1 polymers, polybutene-1 polymers, poly (vinylidene fluoride) polymers, polyvinyl fluoride polymers, polycarbonates, copolyestercarbonates, polyamides, polyacetals, polyphenylene oxides, polyesters, glycolized polyesters, polyphenylene sulfides, polyimides, polysulfones, polyether sulfones, aromatic polyesters, and polyallylates.

5. The article of claim 1, wherein the adhesive is chosen from permanent adhesives, semi-permanent adhesives, repositionable adhesives, releasable adhesives, pressure sensitive adhesives and freezer category adhesives.

6. An article comprising a composition comprising nanoparticles, one or more fluorinated compounds, and one or more compounds to cure the composition, the composition is adjacent a first side of a support film and an adhesive is adjacent a second side of the support film, the adhesive is a releasable adhesive.

7. The article of claim 6, wherein the fluorinated compounds are chosen from one or more fluorinated polyethers.

8. A method comprising:
a) providing an article comprising a composition comprising nanoparticles and one or more fluorinated compounds and one or more compounds to cure the composition, the composition is adjacent a first side of a support film and an adhesive is adjacent a second side of the support film; and
b) applying the article to a substrate to protect the substrate and to inhibit formation of interference patterns.

9. The method of claim 8, wherein the substrate is chosen from glass, and transparent polymers.

10. The method claim 9, wherein the substrate is a window, windshield, lens or mirror.
